# EUROPÄISCHE PATENTSCHRIFT

(11) **EP 4 086 150 B1**
(45) Veröffentlichungstag und Bekanntmachung des Hinweises auf die Patenterteilung: **02.07.2025**
(21) Anmeldenummer: 22171098.1
(22) Anmeldetag: 02.05.2022
(51) Int. Cl.: B62K 5/10, B62K 25/00, B62K 7/04, B60G 21/05

(54) **RADACHSE ZUM AUFNEHMEN EINES SCHWENKBAREN FAHRZEUGRAHMENS**
WHEEL AXLE FOR RECEIVING A PIVOTABLE VEHICLE FRAME
ESSIEU PERMETTANT DE LOGER UN CHÂSSIS PIVOTANT DE VÉHICULE

(30) Priorität: 04.05.2021 DE 102021002355
(43) Veröffentlichungstag der Anmeldung: 09.11.2022
(73) Patentinhaber: Hirschvogel E-Solutions GmbH, 87600 Kaufbeuren (DE)
(72) Erfinder: BLÜMEL, Matthias, 83730 Fischbachau (DE)
(74) Vertreter: Kiwit, Benedikt

(56) Entgegenhaltungen:
- WO-A2-00/09913
- DE-U1- 9 211 853
- US-A- 4 469 188
- US-B2- 7 900 943
- US-B2- 7 967 309

## Beschreibung

### Technisches Gebiet

Die vorliegende Erfindung betrifft eine Radachse zum Aufnehmen eines schwenkbaren Fahrzeugrahmens, einen schwenkbaren Fahrzeugrahmen mit einer solchen Radachse und ein Fahrzeug, insbesondere drei- oder vierrädriges Lastenfahrrad, mit einem solchen schwenkbaren Fahrzeugrahmen und einer solchen Radachse.

### Stand der Technik

Durch die rasant fortschreitende zivilisatorische Entwicklung und das veränderte Konsumverhalten in Richtung e-commerce entsteht ein steigender Bedarf an Gütertransport, insbesondere auf begrenztem städtischem Raum. Klassische Lieferfahrzeuge wie LKWs oder PKWs haben an vielen Orten im urbanen Raum mit dem Mangel an Infrastruktur zu kämpfen, die für ein ordnungsgemäßes Funktionieren notwendig ist, wie z. B. fehlende Parkplätze, die ein Be- oder Entladen ermöglichen.

Weiterhin gewinnt durch die zunehmende Verdichtung der Städte auch der Bedarf an kleineren und wendigen Fahrzeugen, insbesondere Lastenfahrrädern, an Bedeutung.

Lastenfahrräder gibt es in verschiedenen Ausführungen. Beispielsweise können Lastenfahrräder mehrrädrig, insbesondere zweirädrig oder dreirädrig sein. Die Antriebssachse ist gewöhnlich an der Hinterachse angeordnet, welche durch ein Kettengetriebe oder einen elektrischen Motor angetrieben werden kann. Ein zum Transportieren von Gütern oder Kleinkindern ausgelegter Container, Behälter oder Kasten ist entweder vor dem Lenkrad in Höhe der Vorderachse oder hinter dem Sattel in Höhe der Hinterachse angeordnet und mit dem Fahrradrahmen verbunden.

Um die Wendigkeit der Fahrzeuge, insbesondere Lastenfahrräder zu verbessern bzw. den Kurvenradius zu verkleinern und die Stabilität in Kurvenfahrt zu erhöhen sind Lastenfahrräder bekannterweise mit Neigetechniken bzw. Kippmechanismen ausgestattet, die es ermöglichen, dass das Fahrrad um die Längsachse geschwenkt bzw. gekippt werden kann.

Viele Typen von Anordnungen für solche Kippmechanismen sind vorgeschlagen, um Rahmen und/ oder Räder in einer Kurve zu kippen bzw. zu schwenken.

Die bekannte Lösung benötigen jedoch oftmals komplizierte und/ oder teure und/ oder versagensanfällige technische Konstruktionen, die ein Kippen des Rahmens bereitstellt.

EP 3 290 315 A1 offenbart ein Lastenfahrrad mit einem Kippmechanismus umfassend ein Parallelogrammstangensystem mit ersten und zweiten parallelen Hauptstangen und dritten und vierten Hilfsstangen, die jeweils die benachbarten Enden der ersten bzw. zweiten Hauptstange verbinden, wobei die Mittelzone der ersten Hauptstange schwenkbar an dem ersten Montagepunkt des Hilfsrahmens angebracht ist. Ein Container, der einen Laderaum bereitstellt, ist an dem Rahmen angeordnet. Der Kippmechanismus ist an der Vorderachse angeordnet, welche nicht angetrieben wird.

DE 20 2014 010 970 U1 offenbart ein Lastenfahrrad mit einem Kippmechanismus, der ebenfalls eine Parallelogrammstruktur aufweist, die eine floatende obere und untere Stange hat, von der jede zwei Enden hat, die lateral voneinander beabstandet sind, und ein Paar von verbindenden Stangen, die in jedem Ende der oberen und unteren Stangen angeordnet sind, wobei die obere und untere Stange drei Drehgelenke hat, eine in jedem Ende und eine an dem Zentrum, und wobei die obere und untere Stange angeordnet sind, um die Drehgelenke an dem Zentrum zu drehen, und eingerichtet sind, mittels dieser zentralen Drehgelenke mit dem Hauptrahmen verbunden zu werden, wobei die Verbindungsstangen drehbar mit den Drehgelenken an jedem Ende der oberen und unteren Stangen verbunden sind, wobei jedes der Steuerelemente eine Steuerachse definiert, die einen Winkel mit der Zentralebene der Räder hat. Der Kippmechanismus ist ebenfalls an der Vorderachse angeordnet, welche nicht angetrieben wird.

Des Weiteren sind Lösungen bekannt, einen schwenkbaren Fahrzeugrahmen bei gleichzeitiger Übertragung der vom Fahrer und/ oder eines Motors aufgebrachten Leistungen an die Antriebsräder bereitzustellen.

US 8,387,740 B2 offenbart ein Kraftfahrzeug mit einem Rahmen, welcher sich um die Längsachse neigen kann und einen Antriebsmechanismus, der an dem Rahmen montiert ist. Eine hintere Rahmen- und Aufhängungsbaugruppe weist eine Steuerbaugruppe auf, welche sich auf beiden Seiten vom Rahmen befindet. Jede Steuerbaugruppe hat einen unteren Steuerarm, einen oberen Steuerarm, einen Aktuator, der die inneren Enden des unteren Steuerarms und des oberen Steuerarms verbindet, und eine Nabenbaugruppe, die die äußeren Enden des unteren Steuerarms und des oberen Steuerarms verbindet. Die Steuerbaugruppen ermöglichen es dem Rahmen über einen Bereich von Winkeln relativ zu einer Ebene zu neigen.

Der mechanische Aufbau ist jedoch kompliziert und erfordert viele miteinander zu verbindende Teile.

Weiterhin sind Lösungen aus dem Automobilbau bekannt, welche mittels mehrteiligen Seitenwellen, die durch Kardangelenke verbunden sind, den Längenausgleich gewährleisten. Bei größeren Neigewinkeln entstehen jedoch Probleme mit der Realisierung des Längenausgleichs innerhalb der Seitenwellen. Des Weiteren erfordert diese Lösung eine ausreichende Bodenfreiheit der Radachse, sodass Bodenkontakt der Seitenwellen im geneigten Zustand vermieden wird.

US 4,469,188 A offenbart ein Dreirad, welches eine Antriebswelle über eine Schwinge lagert. Ein Antriebszahnrad ist an der Antriebswelle rein zur Übertragung einer Antriebsbewegung aber nicht zum Tragen eines Fahrzeugrahmens über ein Gleichlaufgelenk verbunden. Die US 7 967 309 B2 zeigt einen der US 4,469,188 A im weitesten Sinne vergleichbaren Aufbau.

### Darstellung der Erfindung

Eine Aufgabe der Erfindung besteht darin, eine Radachse vorzusehen, welche einen einfachen mechanischen Aufbau und eine zeit- und kosteneffiziente Herstellung für ein Fahrzeug mit einem schwenkbaren Fahrzeugrahmen gewährleistet. Gleichzeitig besteht eine weitere Aufgabe der Erfindung darin, eine Radachse vorzusehen, welche dazu eingerichtet ist, einen Fahrzeugrahmen an die Radachse schwenkbar anzubinden, wobei die Radachse angetrieben werden kann.

Die Aufgabe wird durch eine Radachse mit den Merkmalen des Anspruchs 1 gelöst. Vorteilhafte Weiterbildungen ergeben sich aus den Unteransprüchen, der Beschreibung und den Figuren.

Entsprechend wird eine Radachse zum Aufnehmen eines schwenkbaren Fahrzeugrahmens vorgeschlagen. Die Radachse weist eine starre Welle und einen Achsrahmen auf.

Die Welle ist mittels des Achsrahmens drehbar gelagert. Der Achsrahmen ist mit dem Fahrzeugrahmen verbindbar. Eine erste Lagerstelle ist am Achsrahmen angeordnet, um den Fahrzeugrahmen an dem Achsrahmen schwenkbar um eine Schwenkachse zu lagern. Eine zweite Lagerstelle ist an der starren Welle angeordnet, um den Fahrzeugrahmen an der starren Welle schwenkbar um die Schwenkachse zu lagern, wobei die Schwenkachse durch die Verbindungslinie der ersten Lagerstelle und der zweiten Lagerstelle in Längsrichtung des Fahrzeugrahmens definiert ist und die Schwenkachse quer zur starren Welle verläuft. Die zweite Lagerstelle weist ein Gleichlaufgelenk mit einem an dem Gleichlaufgelenk umfangsseitig (mithin also außen umfangsseitig) angeordneten Wälz- oder Gleitlager auf.

Die Radachse ist somit mit einem Fahrzeugrahmen verbindbar. Umgekehrt ist der Fahrzeugrahmen ebenfalls mit der Radachse verbindbar.

Entgegen den aus dem Stand der Technik bekannten Lösungen weist die Radachse eine starre Welle auf, welche antreibbar ist und somit die an der Welle montierten Räder eines Fahrzeuges antreibt. Ein an der starren Welle angeordnetes zentrales Gleichlaufgelenk ist derart ausgelegt, den Fahrzeugrahmen schwenkbar zu lagern und zugleich ein Drehmoment auf die starre Welle zu übertragen. Mithin weist die zweite Lagerstelle das Gleichlaufgelenk mit dem an dem Gleichlaufgelenk umfangsseitig (mithin also außen umfangsseitig) angeordneten Wälz- oder Gleitlager auf, um so den Fahrzeugrahmen über das Wälz- oder Gleitlager und das Gleichlaufgelenk an der starren Welle zu lagern. Die erste Lagerstelle lagert den Fahrzeugrahmen auf dem Achsrahmen, sodass die Schwenkachse, um die der Fahrzeugrahmen kippt, durch die Verbindungslinie der beiden Lagerstellen definiert ist. Dieser einfache mechanische Aufbau ermöglicht eine schnelle und kostengünstige Variante für einen schwenkbaren Fahrzeugrahmen mit einer starren Welle. In anderen Worten, es wurde festgestellt, dass die Verwendung eines zentralen Gleichlaufgelenks die Verwendung einer starren Welle für ein Fahrzeug mit schwenkbaren Rahmen und gleichzeitig angetriebener Achse ermöglicht. Dadurch kann der mechanische Aufbau einer Radachse, um einen schwenkbaren Fahrzeugrahmen an eine vorzugsweise angetriebene Radachse zu befestigen, signifikant vereinfacht werden und eine kosten- und zeiteffiziente Lösung bereitgestellt werden.

Die Verwendung einer Radachse gemäß dieser Erfindung, ermöglicht eine kosten- und zeiteffiziente Herstellung des Fahrzeugrahmens, da der Ausgleich von etwaigen Fertigungstoleranzen am Rahmen durch die Einstellung der ersten und zweiten Lagerstelle aufeinander auf einfache Arte und Weise möglich ist.

Der Fahrzeugrahmen erstreckt sich im Wesentlichen entlang einer vertikalen Ebene und ist vorzugsweise ein Rahmen für ein Lastenfahrrad, wobei die vertikale Ebene durch die Gravitationsachse und die Erdoberfläche gebildet ist.

Der Achsrahmen ist vorzugsweise ausgelegt, die Welle an zwei gegenüberliegenden Stellen dezentral von der Längsachse des Fahrzeugrahmens gesehen drehbar zu lagern.

Die Längsachse ist definiert durch die longitudinale Erstreckung des Fahrzeugrahmens und verläuft quer zur Radachse.

Die Schwenkachse ist durch eine gedachte Verbindungslinie der Mittelpunkte der ersten und zweiten Lagerstelle definiert.

Unter dem Begriff "starr" ist eine gelenkslose, integrale Welle zu verstehen. Die Welle erstreckt sich im Wesentlichen gerade entlang der Längsrichtung der Achse und weist keine Gelenke auf, die eine Relativbewegungen von Wellenabschnitten erlauben. Die Welle verläuft sozusagen entlang einer gerade Linie von einem Ende zum anderen Ende. Die starre Welle ist drehbar um die Längsachse der Welle und an mindestens zwei Lagerpunkten an dem Achsrahmen gelagert. Die Welle ist eingerichtet, mindestens zwei Räder zu lagern und anzutreiben. Die Welle weist keine Gelenke auf, um ein durch die Neigung des Fahrzeugrahmens induzierten Längenausgleich der Welle auszugleichen. Die Neigung des Fahrzeugrahmens wird allein durch die Lagerung des schwenkbaren Fahrzeugrahmens an der ersten und der zweiten Lagerstelle bereitgestellt. Wie oben beschrieben gewährleistet das Gleichlaufgelenk, dass der Fahrzeugrahmen um die Längsachse kippen kann, ohne dass es dafür Längenausgleichsbewegungen an der Welle benötigt.

Die Welle kann auch als Antriebs- oder Abtriebswelle bezeichnet werden.

Die Radachse kann mindestens zwei gegenüberliegende drehbar gelagerte Räder aufweisen.

Die Begriffe schwenkbar bzw. schwenken und neigbar bzw. neigen und kippbar bzw. kippen können austauschbar verwendet werden, und beschreiben eine zumindest teilweise Schwenkbewegung um die Schwenkachse.

Der Begriff drehfest wird dahingehend verstanden, dass ein Bauteil mit einem anderen Bauteil fixiert ist und keine relative Bewegung gegenüber diesem anderen Bauteil hat.

In einem bevorzugten Beispiel ist die zweite Lagerstelle zentral an der Welle angeordnet.

Durch die zentrale Anordnung des Gleichlaufgelenks ist der Fahrzeugrahmen zu beiden Seiten um seine Längsachse schwenkbar.

Dabei kann das Gleichlaufgelenk derart ausgelegt sein, dass der Fahrzeugrahmen um einen Winkel +/- 10°- 20°, vorzugsweise 20°-30°, besonders bevorzugt 30°- 45° in Bezug auf einer gedachten vertikalen Achse am Gleichlaufgelenk schwenkbar ist.

In einem Beispiel kann das Gleichlaufgelenk über Vorspannungselemente in der vertikalen Richtung vorgespannt sein. Dadurch wird das Aufrichten des Fahrzeugrahmens nach der Schwenkbewegung in die Ausgangsstellung erleichtert.

Gemäß einer bevorzugen Ausführungsform ist das Gleichlaufgelenk mit einem Antriebselement drehfest verbunden.

Das Antriebselement kann ein Zahnrad sein, welches durch eine Kette angetrieben werden kann. Das Drehmoment kann dabei durch Muskelkraft oder durch einen Motor, vorzugsweise elektrisch aufgebracht werden.

Die Anordnung des Antriebselements an das Gleichlaufgelenk ermöglicht somit ein Drehmoment auf die Welle zu übertragen, wobei das Antriebselement bei einer Schwenkbewegung des Gleichlaufgelenks bzw. des Fahrzeugrahmens mitschwenkt. Somit gewährleistet das Gleichlaufgelenk eine schwenkbare Lagerung des Fahrzeugrahmens sowie eine Übertragung des durch das Antriebselement induzierte Drehmoment auf die Welle.

Das Antriebselement stellt die Übertragung eines Drehmoments auf die Welle, insbesondere Abtriebswelle, bereit. Die Schwenkebene des Antriebselements verläuft parallel zur Schwenkebene des Fahrzeugrahmens und schwenkt durch die Anordnung an das Gleichlaufgelenk, sowie der Fahrzeugrahmen, in synchroner Weise.

Gemäß einer Ausführungsform weist das Gleichlaufgelenk ein Gelenkaußenteil und ein Gelenkinnenteil auf, wobei das Gelenkinnenteil innerhalb des Gelenkaußenteils angeordnet ist und formschlüssig und/ oder kraftschlüssig und/ oder stoffschlüssig mit dem Gelenkaußenteil über eine oder mehrere drehmomentübertragene Kugeln oder Rollen verbunden ist.

Gleichlaufgelenke werden im Maschinenbau und an Antriebswellen im Automobilbau in verschiedenen Ausführungsformen verwendet und deren Funktionsweise ist bekannt.

In einer bevorzugten Ausführungsform ist das Gleichlaufgelenk als "Rzeppa" ausgestaltet. Vorzugsweise wird die Drehmoment- und Kraftübertragung durch mehrere Kugeln, die sich zwischen dem Gelenkinnenteil und dem Gelenkaußenteil befinden, übertragen. Dabei werden die Kugeln durch Aussparungen in einem Käfig gehalten, der zwischen dem Gelenkinnenteil und dem Gelenkaußenteil angeordnet ist. Die Konstruktion des Gelenks ist so ausgelegt, dass die Position der Kugeln den Betriebswinkel des Gelenks immer halbiert. Das Drehmoment wird über das Gelenk übertragen, indem die Kugeln gegen ihre jeweiligen Bahnen im Gelenkinnenteil und Gelenkinnenteil drücken.

Die von einem Fahrer durch Gewichtsverlagerung auf den Fahrzeugrahmen induzierte Schwenkkraft wird auf das Gelenkaußenteil, welches über dem Wälz- oder Gleitlager (bspw. ein Rillenkugellager) in axialer Richtung formschlüssig verbunden ist, aufgebracht. Das Gelenkaußenteil weist eine konkave Oberfläche mit innenliegenden geformten Aussparungen bzw. Bahnen für die eine oder mehrere drehmomentübertragenden Kugeln auf, in denen die Kugeln um die Schwenkachse laufen bzw. abrollen, wenn der Fahrzeugrahmen um die Längsachse geschwenkt wird. Die Bahnen können sich im Wesentlichen über die Breite der inneren Seitenwand des Gelenkaußenteils erstrecken.

Das Gelenkaußenteil ist innerhalb des Wälzlagers oder Gleitlagers drehbar gelagert. Des Weiteren ist das Wälz- oder Gleitlager und das Gelenkaußenteil um das Gelenkinnenteil schwenkbar gelagert.

Das Gelenkinnenteil weist eine zahnradförmige oder polygonförmige Struktur auf, um mit den Kugeln in Eingriff zu stehen.

Durch den Einsatz eines einzelnen Gleichlaufgelenks in Kombination mit einem Wälz- oder Gleitlager (bspw. ein Rillenkugellager) kann ein einfacher mechanischer Aufbau für einen schwenkbaren Fahrzeugrahmen realisiert werden. Weitere Bauteile wie Stangen oder Streben in Form von Parallelogrammstrukturen sind für die Übertragung der Schwenkbewegung nicht notwendig. Dadurch kann die Herstellung zeit- und kosteneffizient realisiert werden.

In einem weiteren Beispiel kann das Gleichlaufgelenk als ein Tripod-Gelenk ausgestaltet sein. Tripod-Gelenke haben keine Kugeln, sondern verwenden stattdessen nadelgelagerte Rollen, die auf einem dreibeinigen Zahnkranz montiert sind. Die Rollen sind in einem Winkel von 120 Grad zueinander montiert und gleiten in Bahnen in einem äußeren "Tulpen"-Gehäuse hin und her. Gemäß einer weiteren Ausführungsform ist das Antriebselement mit dem Gelenkaußenteil drehfest verbunden, sodass das Drehmoment auf die starre Welle über das Gelenkaußenteil und die eine oder mehrere drehmomentübertragende Kugeln oder Rollen auf das Gelenkinnenteil übertragbar ist. Ein Wellenabschnitt ist formschlüssig mit dem Gelenkinnenteil verbunden.

In einem Beispiel ist der Wellenabschnitt eine zahn- oder polygonförmige Struktur, welche mit einer komplementär strukturierten Innenseite des Gelenkinnenteils in Eingriff steht, um das Drehmoment zu übertragen. In einem Beispiel ist das Gelenkinnenteil an der Außenseite derart ausgestaltet, sodass die Rollen oder Kugeln in Umfangsrichtung mit dem Gelenkinnenteil in Eingriff steht. In axialer Richtung sind die Kugeln oder Rollen bis zu einem bestimmbaren, vom gewünschten Neigewinkel abhängigen Anschlagpunkt frei bewegbar.

Das von einem Fahrer auf das Antriebselement übertragene Drehmoment versetzt somit das Gelenkaußenteil in eine Drehbewegung. Diese Drehbewegung wird über die drehmomentübertragenden Kugeln oder Rollen auf das Gelenkinnenteil übertragen. Das Gelenkinnenteil ist formschlüssig mit dem Wellenabschnitt verbunden.

Das Antriebselement kann als ein Zahnrad ausgebildet sein, welches durch eine Kette angetrieben werden kann.

Die direkte Anordnung des Antriebselements an das Gelenkaußenteil ermöglicht eine platzsparende Gestaltung der zweiten Lagerstelle, die zum einen die Schwenkbewegung des Fahrzeugrahmens sicherstellt und zum anderen das Drehmoment auf die Welle überträgt.

Gemäß einer weiteren Ausführungsform ist die erste Lagerstelle ein Kugelgelenk oder ein Pendellager.

Alternativ kann der Achsrahmen ein zentral vom Achsrahmen vorstehendes Rohr in Längsrichtung aufweisen, das in ein Endstück eines Rohres des Fahrzeugrahmens eingeschoben wird. Der Fahrzeugrahmen kann dadurch um das vorstehende Rohr des Achsrahmens schwenken. Der Fahrzeugrahmen ist über eine Fahrzeugrahmenverlängerung oder einen Befestigungsarm an das Wälz- oder Gleitlager und dem Gleichlaufgelenk verbunden.

Der Einsatz eines Kugelgelenks oder eines Pendellagers hat gegenüber der Lösung von ineinander geschobenen Rohrendstücken den Vorteil, dass die Verbindung des Achsrahmens und des Fahrzeugrahmens an der ersten Lagerstelle in Bezug auf die zweite Lagerstelle einstellbar ist. In anderen Worten kann eine Positionierung des Fahrzeugrahmens an der ersten Lagerstelle in vertikaler Richtung in Bezug auf die zweite Lagerstelle eingestellt werden. Dadurch können die Fehlertoleranzen in Bezug auf die Ausführung des Rohrendstücks, insbesondere der Längserstreckung, reduziert werden und die Herstellung des Fahrzeugrahmens vereinfacht, kostengünstig und zeiteffizient hergestellt werden.

Gemäß einer weiteren Ausführungsform weist die Radachse ein Ausgleichsgetriebe auf, welches exzentrisch in Bezug auf die Radachsenmitte angeordnet ist, wobei die Antriebswelle zwei starre Seitenwellen mit unterschiedlichen Längen aufweist. Die Radachsenmitte liegt auf der Symmetrieachse des Fahrzeugrahmens und der Radachse. In anderen Worten ist die zweite Lagerstelle zentral an der Radachse bzw. Welle angeordnet und das Ausgleichsgetriebe versetzt davon in Richtung der Längsachse der Radachse bzw. Welle angeordnet.

Die Seitenwellen können auch als Antriebswellen oder Achswellen verstanden werden.

Das Ausgleichsgetriebe kann auch als ein Differential verstanden werden, welches unterschiedliche Drehgeschwindigkeiten auf die zwei Seitenwellen in Kurvenfahrt oder bei unterschiedlichen Bodenverhältnissen überträgt.

Durch die exzentrische Anordnung des Ausgleichsgetriebes kann das Gleichlaufgelenk zentral angeordnet werden und den Fahrzeugrahmen zentral schwenkbar lagern. Weiterhin ist diese Anordnung des Gleichlaufgelenkes und des Ausgleichsgetriebes vorteilhaft, da dadurch der Bauraum in vertikaler Richtung klein gehalten werden und beispielsweise ein oberhalb der Welle angeordneter Behälter eines Fahrzeugs nah an der Bodenoberfläche gehalten werden kann. Dadurch kann der Schwerpunkt des Behälters und des Fahrzeuges niedrig gehalten werden, was sich positiv auf die Manövrierbarkeit des Fahrzeuges, insbesondere bei Beladung des Behälters, auswirkt.

Gemäß einer Ausführungsform weisen die zwei Seitenwellen jeweils eine Hohlwelle und eine Innenwelle auf, wobei die Hohlwelle die Innenwelle umschließt. Die Hohlwelle ist mit einem Ausgleichsgetriebegehäuse drehfest verbunden. Die Innenwelle weist ein Achswellenrad auf, das mit mindestens einem Ausgleichsrad des Ausgleichsgetriebes in Eingriff steht.

Die Hohlwelle überträgt das Drehmoment somit auf das Ausgleichswellengetriebegehäuse.

In einem Beispiel sind die Räder an der Radachse nicht steuerbar.

In einer weiteren Ausführungsform kann die Radachse einen Lenkerrahmen aufweisen, um eine Lenkstange mit der Radachse zu verbinden. Der Lenkerrahmen kann bügelartig ausgestaltet sein und erstreckt sich im Wesentlichen parallel zu einer Lenkerstange eines Fahrzeugs. Die Lenkerstange ist über den Lenkerrahmen mit der zweiten Lagerstelle und dem Achsrahmen verbunden, sodass eine Lenkbewegung über den Achsrahmen auf die Radachse übertragen wird. Die Radachse dreht sich bei einer Lenkbewegung um die gedachte vertikale Achse in Bezug auf die zweite Lagerstelle. Somit kann ein schwenkbarer Fahrzeugrahmen mit der erfindungsgemäßen Radachse an einer Vorderachse mit einer Lenkung für ein Fahrzeug bereitgestellt werden.

Gemäß einer Ausführungsform weist die Radachse einen Befestigungsarm auf, um den Fahrzeugrahmen mit der zweiten Lagerstelle zu verbinden. Alternativ kann der Befestigungsarm einstückig mit dem Fahrradrahmen ausgestaltet sein und mit der Radachse verbunden werden, Insbesondere kann der Achsrahmen vor oder hinter der Radachse angeordnet werden. Eine hintere Anordnung des Achsrahmens ist vorteilhaft, da somit mehr Spielraum für die Fahrzeugrahmenkomponenten (Schaltnabe, Kette, etc.) zwischen der ersten Lagerstelle und der zweiten Lagerstelle geschaffen werden kann.

Gemäß einer bevorzugten Ausführungsform umgreift der Befestigungsarm eine Außenseite des Wälz- oder Gleitlagers zumindest abschnittsweise. Alternativ ist der Befestigungsarm als eine Schwinge ausgebildet, die die Außenseite des Wälz- oder Gleitlagers vollumfänglich umgreift.

Dadurch kann eine ausreichende Übertragungsfläche bereitgestellt werden, um die die von dem Fahrzeugrahmen induzierte Schwenkkraft auf das Gleichlaufgelenk zu übertragen.

Gemäß einer weiteren Ausführungsform ist der Achsrahmen bügelartig ausgestaltet.

Vorzugsweise weist der Achsrahmen eine zu der Welle parallellaufende Strebe, insbesondere Rohr, und zwei Halterarme auf, wobei die Haltearme sich quer zur Strebe erstrecken und dazu ausgestaltet sind, die zwei Seitenwellen jeweils in Richtung der Radseite drehbar zu lagern.

Des Weiteren sind die beiden Wellen von der anderen Seite durch das Achswellenrad in dem Ausgleichsgetriebe drehbar gelagert.

Der Achsrahmen ist vorzugsweise als eine U-Form oder V-Form ausgestaltet.

Der Achsrahmen weist weiterhin eine Aussparung für die erste Lagerstelle, insbesondere das Kugellager oder Pendellager, auf, um den Fahrzeugrahmen mit dem Achsrahmen schwenkbar zu verbinden.

Weiterhin wird ein Fahrzeugrahmen vorgeschlagen, wobei der Fahrzeugrahmen an einer Radachse (insbesondere der vorbeschriebenen erfindungsgemäßen Radachse) schwenkbar gelagert ist. Die Radachse ist zum Aufnehmen eines schwenkbaren Fahrzeugrahmens eingerichtet. Die Radachse weist eine starre Welle und einen Achsrahmen auf.

Die Welle ist mittels des Achsrahmens drehbar gelagert. Der Achsrahmen ist mit dem Fahrzeugrahmen verbindbar. Eine erste Lagerstelle ist am Achsrahmen angeordnet, um den Fahrzeugrahmen an dem Achsrahmen schwenkbar um eine Schwenkachse zu verbinden. Eine zweite Lagerstelle ist an der starren Welle angeordnet, um den Fahrzeugrahmen an der starren Welle schwenkbar um die Schwenkachse zu verbinden, wobei die Schwenkachse durch die Verbindungslinie der ersten Lagerstelle und der zweiten Lagerstelle in Längsrichtung des Fahrzeugrahmens definiert ist und die Schwenkachse quer zur starren Welle verläuft. Die zweite Lagerstelle weist ein Gleichlaufgelenk mit einem an dem Gleichlaufgelenk umfangsseitig (mithin also außen umfangsseitig) angeordneten Wälz- oder Gleitlager auf.

Der Fahrzeugrahmen kann über einen Befestigungsarm mit der Radachse verbunden werden. Dabei ist der Befestigungsarm als ein Befestigungselement zu verstehen, welches den schwenkbaren Fahrzeugrahmen mit der Radachse verbindet. In einem Beispiel kann der Befestigungsarm auch integral mit dem Fahrradrahmen ausgestaltet sein, um mit der Radachse verbunden zu werden.

Weiterhin wird ein Fahrzeug, insbesondere ein mehrrädriges Lastenfahrrad, mit einem schwenkbaren Fahrzeugrahmen und einer Radachse vorgeschlagen, wobei die Radachse eine Vorder- und/ oder Hinterradachse bildet. Das Fahrzeug weist ferner einen Behälter auf, der am Fahrzeugrahmen oder Achsrahmen angeordnet ist, wobei der Behälter einen sich über der Radachse erstreckenden Boden und vorzugsweise eine entlang des Umfangs des Behälters bzw. Bodens verlaufende Wand aufweist. Durch die Anbindung des Behälters am Achsrahmen wird vermieden, dass der Behälter mit dem Fahrzeugrahmen mitschwenkt.

Der Befestigungsarm kann als ein Befestigungselement fungieren, um den Fahrradrahmen mit der Radachse zu verbinden. In einem Beispiel kann der Befestigungsarm auch integral mit dem Fahrradrahmen ausgestaltet sein, um mit der Radachse verbunden zu werden.

Unter dem Begriff Fahrzeug im Sinne dieser Beschreibung ist ein mehrrädriges Fahrzeug, insbesondere dreirädriges Lastenfahrrad, und alle anderen Arten von mehrrädrigen Fahrzeugen wie Quads, Scooter oder mehrrädrige Motorräder zu verstehen.

Weitere Vorteile und Merkmale der vorliegenden Erfindung sind aus der folgenden Beschreibung bevorzugter Ausführungsbeispiele ersichtlich. Die dort beschriebenen Merkmale können alleinstehend oder in Kombination mit einem oder mehreren der oben dargelegten Merkmale umgesetzt werden, insofern sich die Merkmale nicht widersprechen. Die folgende Beschreibung bevorzugter Ausführungsbeispiele erfolgt dabei unter Bezugnahme auf die begleitenden Zeichnungen. Der Schutzumfang wird durch die beigefügten Ansprüche definiert.

### Kurze Beschreibung der Figuren

Bevorzugte weitere Ausführungsformen der Erfindung werden durch die nachfolgende Beschreibung der Figuren näher erläutert. Dabei zeigen:
- Figur 1: zeigt eine schematische Ansicht einer Radachse gemäß einer Ausführungsform;
- Figur 2a-2b: zeigen zwei perspektivische Ansichten der Radachse gemäß einer Ausführungsform;
- Figur 3a-3b: zeigen zwei Schnittansichten durch die Längsachse der Radachse gemäß einer Ausführungsform;
- Figur 4: zeigt eine zentrale Schnittansicht quer zur Radachse gemäß einer Ausführungsform;
- Figur 5a-5c: zeigen die Radachse in einer aufgerichteten Stellung und in einer zu beiden Seiten hin gekippten Stellung gemäß einer Ausführungsform;
- Figur 6a-6c: zeigen ein Fahrzeug, insbesondere ein Lastenfahrrad, mit einer erfindungsgemäßen Radachse und einem schwenkbaren Fahrzeugrahmen in einer perspektivischen Ansicht, in einer Hinteransicht in einer aufgerichteten Stellung und in einer Hinteransicht in einer gekippten Stellung gemäß einer Ausführungsform;
- Figur 7a-7b: zeigen ein Fahrzeug mit einer erfindungsgemäßen Radachse als Vorderachse und einem schwenkbaren Fahrzeugrahmen in einer perspektivischen Ansicht und einer Detailansicht gemäß einer Ausführungsform; und
- Figur 8a-8c: zeigen Detailansichten des Befestigungsarms an einem Befestigungsabschnitt der zweiten Lagerstelle gemäß einer Ausführungsform.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

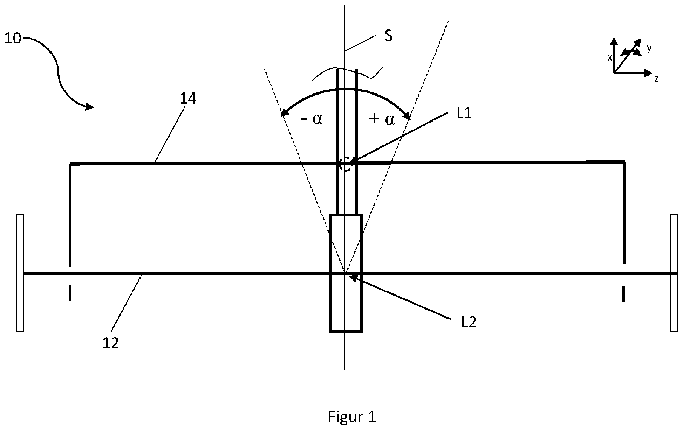

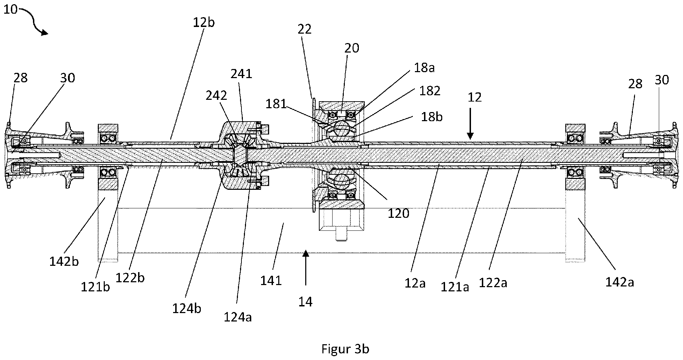

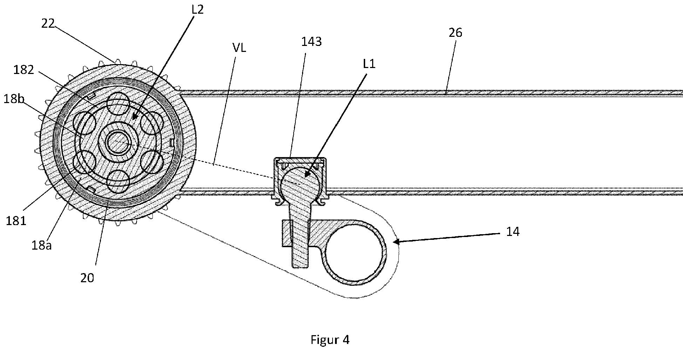

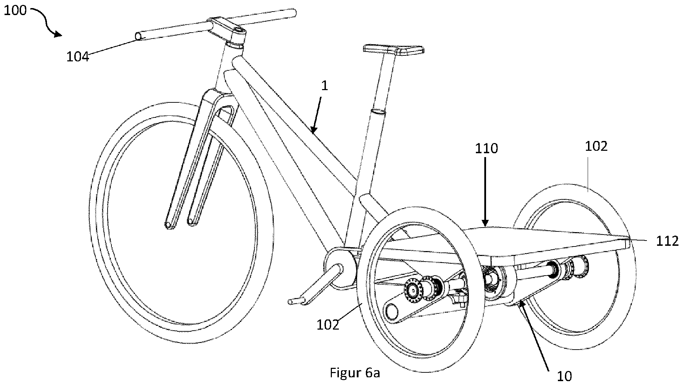

Figur 1 zeigt eine schematische Ansicht einer Radachse 10 zum Aufnehmen eines schwenkbaren Fahrzeugrahmens (siehe Fig. 6a-c). Die Radachse 10 weist eine starre Welle 12 und einen Achsrahmen 14 auf. Die Welle 12 ist mittels des Achsrahmens 14 drehbar gelagert. Der Achsrahmen 14 ist mit einem Fahrzeugrahmen verbindbar. Eine erste Lagerstelle L1 ist am Achsrahmen 14 angeordnet, um einen Fahrzeugrahmen an dem Achsrahmen 14 schwenkbar um eine Schwenkachse S zu lagern. Eine zweite Lagerstelle L2 ist an der starren Welle 12 angeordnet, um den Fahrzeugrahmen an der starren Welle 12 schwenkbar um die Schwenkachse zu lagern, wobei die Schwenkachse S durch die Verbindungslinie VL (siehe Figur 4) der ersten Lagerstelle L1 und der zweiten Lagerstelle L2 in Längsrichtung des Fahrzeugrahmens definiert ist und die Schwenkachse S quer zur starren Welle 12 verläuft. Die zweite Lagerstelle L2 weist ein Gleichlaufgelenk 18 (siehe im Detail z.B. Figur 3b) mit einem an dem Gleichlaufgelenk 18 umfangsseitig (mithin also außen umfangsseitig) angeordneten Wälz- oder Gleitlager 20 (siehe z.B. im Detail Figur 3b) auf.

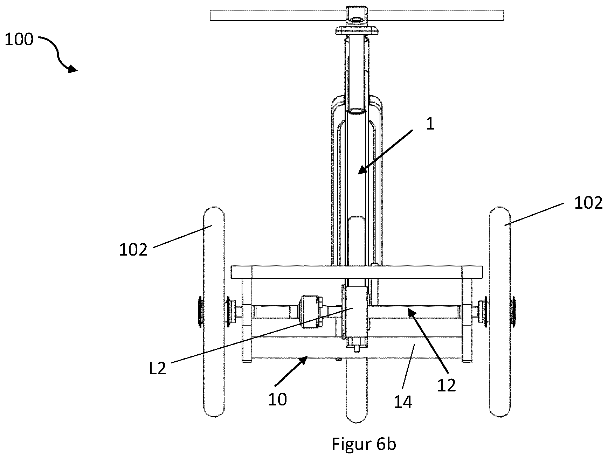

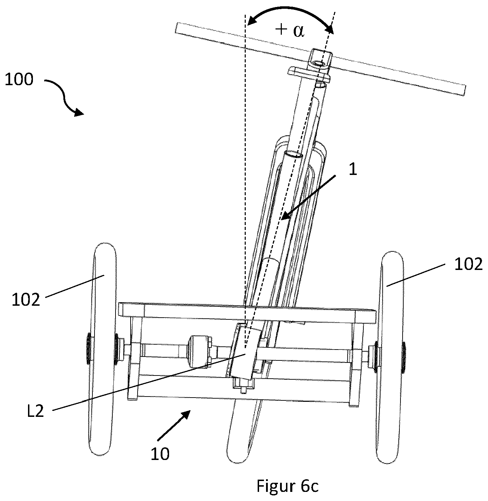

Die Radachse 12 ist somit eingerichtet, um mit einem Fahrzeugrahmen verbunden zu werden. Der Fahrzeugrahmen 1 (siehe Fig. 6) ist ebenfalls eingerichtet, um mit der Radachse 10 verbunden zu werden.

Die erste Lagerstelle L1 ist eingerichtet, den Fahrzeugrahmen auf den Achsrahmen 14 der Radachse 10 schwenkbar zu lagern. Die zweite Lagerstelle L2 der Radachse 10 ist eingerichtet, den Fahrzeugrahmen in Höhe der Welle 12 in Längsrichtung gesehen schwenkbar zu lagern.

In einem bevorzugten Beispiel ist die zweite Lagerstelle L2 zentral an der Welle 12 angeordnet.

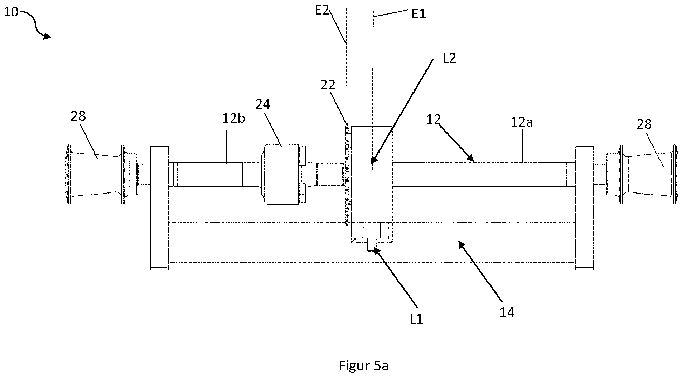

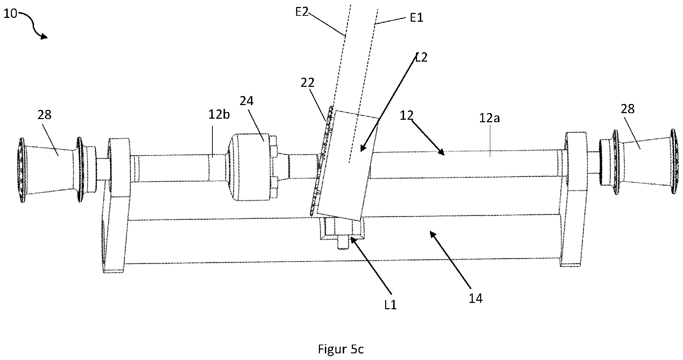

Durch die zentrale Anordnung der ersten Lagerstelle L1 und der zweiten Lagerstellte L2 ist der Fahrzeugrahmen 1 zu beiden Seiten (siehe auch Figur 5a und Figur 5c) um die Längsachse S schwenkbar, wie durch den doppelseitigen Pfeil symbolisch angedeutet ist. Die Schwenkachse ist von der räumlichen Ausrichtung in dem abgebildeten Koordinatensystem als die y-Achse zu verstehen. Der schwenkbare Fahrzeugrahmen ist somit um die y-Achse schwenkbar.

Dabei kann das Gleichlaufgelenk derart ausgelegt sein, dass der Fahrzeugrahmen um einen Winkel α +/- 10°-20°, vorzugsweise +/- 20-30°, besonders bevorzugt +/-30-45° schwenkbar ist.

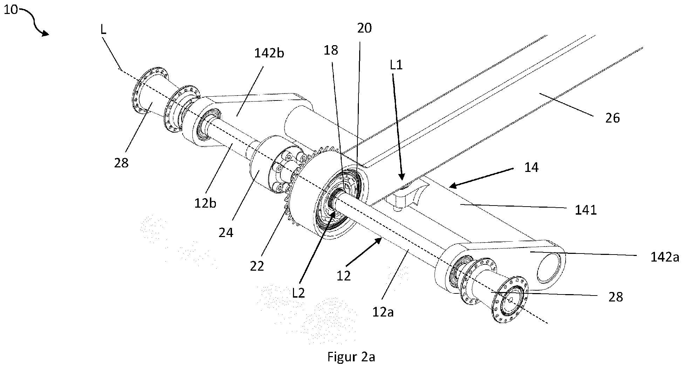

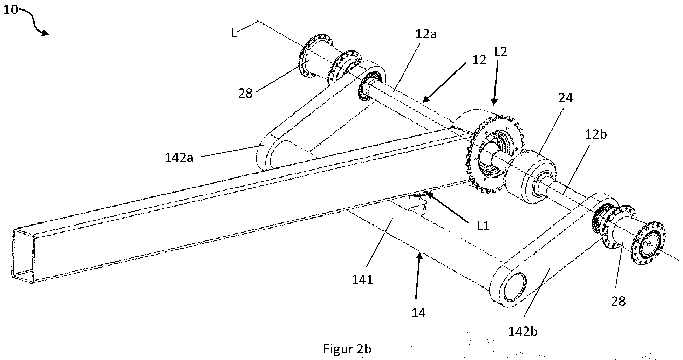

Figur 2a und Figur 2b zeigen zwei perspektivische Ansichten der Radachse 10 gemäß einer Ausführungsform. Figur 2a zeigt die Radachse von einer Perspektive, welche von hinten entlang der Längsrichtung des Fahrzeugrahmens gerichtet ist. Figur 2b zeigt die Radachse von einer Perspektive, welche von vorne schräg in Längsrichtung des Fahrzeugrahmens gerichtet ist.

Vorzugsweise weist die Radachse 10 einen Befestigungsarm 26 auf, um den Fahrzeugrahmen an die zweite Lagerstelle L2 und an den Achsrahmen 14 über die erste Lagerstelle L1 zu verbinden.

Weiterhin ist ein Antriebselement 22 gezeigt, welches ein Drehmoment auf das Gleichlaufgelenk 18 übertragen kann. Somit gewährleistet das Gleichlaufgelenk 18 eine schwenkbare Lagerung des Fahrzeugrahmens sowie eine Übertragung des durch das Antriebselement 22 induzierte Drehmoment auf die Welle 12.

Wie hier gezeigt, kann das Antriebselement 22 ein Zahnrad sein, welches durch eine Kette (nicht gezeigt) angetrieben werden kann.

An der Welle 12 sind jeweils an einer Radseite Radnaben 28 vorzugsweise drehfest verbunden, sodass das Drehmoment über die Radnaben 28 auf Räder 102 (siehe Figur 6a) des Fahrzeugs 100 (siehe Fig. 6a) übertragen werden kann.

In einem Beispiel kann die Radachse 10 ein Ausgleichgetriebe 24 aufweisen, dass exzentrisch an der Welle 12 angeordnet ist, wobei die Welle 12 in dieser Ausführungsform zwei starre Seitenwellen 12a, 12b mit unterschiedlichen Längen aufweist.

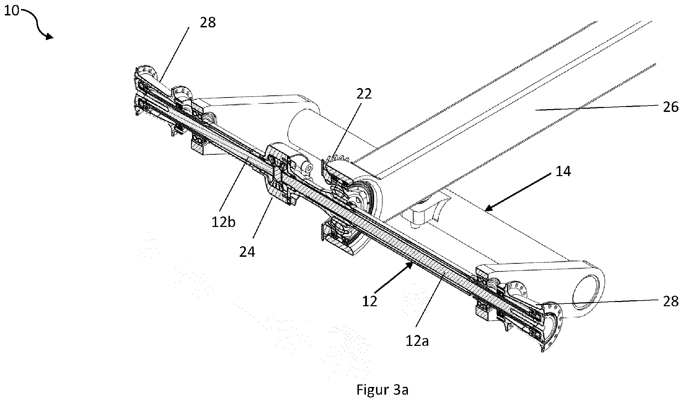

Figur 3a und Figur 3b zeigen zwei Schnittansichten durch die Längsachse L der Radachse 10 gemäß einer Ausführungsform. Wie in Figur 3b in detaillierte Weise beispielhaft gezeigt, weist das Gleichlaufgelenk 18 ein Gelenkaußenteil 18a und ein Gelenkinnenteil 18b auf, wobei das Gelenkinnenteil 18b innerhalb des Gelenkaußenteils 18a angeordnet ist und formschlüssig mit dem Gelenkaußenteil 18a über eine oder mehrere drehmomentübertragene Kugeln 181 verbunden ist.

In der hier gezeigten bevorzugten Ausführungsform ist das Gleichlaufgelenk 18 als "Rzeppa" in einer axialen festen, an der Welle angeordneten Ausführungsform ausgebildet. Vorzugsweise wird die Drehmoment- und Kraftübertragung durch mehrere Kugeln 181, die sich zwischen dem Gelenkinnenteil 18b und dem Gelenkaußenteil 18a befinden, übertragen. Dabei werden die Kugeln 181 in einem Käfig 182 gehalten, der zwischen dem Gelenkinnenteil 18b und dem Gelenkaußenteil 18a angeordnet ist. Das Drehmoment wird über das Gleichlaufgelenk 18 übertragen, indem die Kugeln 181 gegen ihre jeweiligen Bahnen im Gelenkinnenteil 18a und Gelenkinnenteil 18b drücken.

Die die von einem Fahrer durch Gewichtsverlagerung auf den Fahrzeugrahmen induzierte Schwenkkraft wird auf das Gelenkaußenteil 18a, welches über das Wälz- oder Gleitlager 20 in axialer Richtung formschlüssig verbunden ist, aufgebracht. Das Gelenkaußenteil 18a weist eine konkave Oberfläche mit innenliegenden geformten Aussparungen bzw. Bahnen für die eine oder mehrere drehmomentübertragenden Kugeln 181 auf, in denen die Kugeln um die Schwenkachse laufen bzw. abrollen, wenn der Fahrzeugrahmen um die Schwenkachse S geschwenkt wird. Die Bahnen können sich im Wesentlichen über die Breite der inneren Seitenwand des Gelenkaußenteils 18a erstrecken. Das Gelenkaußenteil 18a ist innerhalb des Wälz- oder Gleitlagers 20 drehbar gelagert. Des Weiteren ist das Wälz- oder Gleitlager 20 und das Gelenkaußenteil 18a über das Gelenkinnenteil 18b bzw. die Kugeln 181 schwenkbar gelagert.

Das Gelenkinnenteil 18b kann eine zahnradförmige ähnliche Struktur aufweisen, um mit den Kugeln 181 in Eingriff zu stehen und somit das Drehmoment auf die Welle 12 zu übertragen.

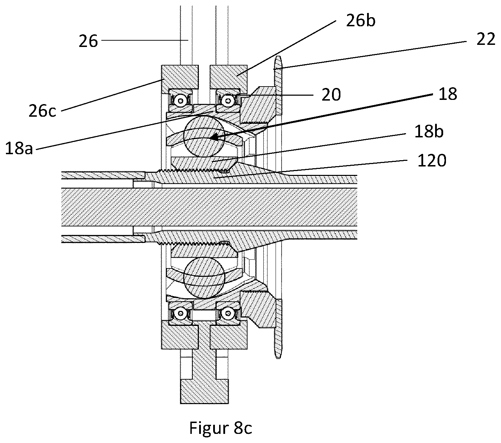

Wie in Figur 3b beispielhaft gezeigt, ist das Antriebselement 22 mit dem Gelenkaußenteil 18a drehfest verbunden, sodass das Drehmoment auf die starre Welle 12 über das Gelenkaußenteil 18a und die eine oder mehrere drehmomentübertragende Kugeln 181 auf das Gelenkinnenteil 18b übertragbar ist. Ein Wellenabschnitt 120 ist formschlüssig mit dem Gelenkinnenteil 18b verbunden, um das Drehmoment auf die Welle12 zu übertragen (siehe Figur 8c).

Das von einem Fahrer auf das Antriebselement 22 übertragene Drehmoment versetzt somit das Gelenkaußenteil 18a in eine Drehbewegung. Diese Drehbewegung wird über die drehmomentübertragenden Kugeln 181 auf das Gelenkinnenteil 18b übertragen.

Weiterhin ist in Figur 3a und Figur 3b ein beispielhafter Aufbau der Welle 12 mit einem Ausgleichsgetriebe 24 gezeigt. Die Welle 12 weist zwei Seitenwellen 12a, 12b auf, die jeweils eine Hohlwelle 121a, 121b und eine Innenwelle 122a, 122b aufweisen, wobei die Hohlwellen 121a, 121b die Innenwellen 122a, 122b umschließen. Die Hohlwellen 121a, 121b sind mit einem Ausgleichsgetriebegehäuse 241 drehfest verbunden. Die Innenwellen 122a, 122b weisen an dem zur Ausgleichsgetriebe 24 gerichteten Ende der Seitenwellen 12a, 12b jeweils ein Achswellenrad 124a, 124b auf, welche jeweils mit mindestens einem Ausgleichsrad 242 des Ausgleichsgetriebes 24 in Eingriff stehen.

Die Hohlwelle 121a überträgt somit das Drehmoment auf das Ausgleichsgetriebegehäuse 241, welches über das mindestens eine Ausgleichsrad 242 das Drehmoment auf die Innenwellen 122a, 122b überträgt.

Die Innenwellen 122a, 122b sind jeweils mit einer Radnabe 28 über ein Fixierungselement 30 drehfest verbunden, um das Drehmoment auf die Räder (nicht gezeigt) zu übertragen. Die Radnabe 28 ist auf einem Endstück in Richtung der Radseite des Fahrzeugs der Hohlwelle 121a, 121b drehbar gelagert. Die Innenwelle 122a, 122b ist innerhalb der Hohlwelle 121a, 121b und dem Ausgleichsgetriebe 24 drehbar gelagert.

In einem Beispiel ist die Innenwelle 122a, 122b derart ausgeführt, dass die Innenwelle 122a, 122b von außen, d. h. von der Radseite in Richtung des Ausgleichsgetriebes 24 in die Hohlwelle 121a, 121b und das Ausgleichsgetriebe 24 eingeschoben werden kann. Dies ist vorteilhaft, da die Wellen einfach montiert werden können und schnell gewartet werden können.

Weiterhin, wie z.B. in Figur 3a oder Figur 2a, Figur 2b gezeigt, weist die Radachse 10 einen Befestigungsarm 26 auf, um den Fahrzeugrahmen mit der zweiten Lagerstelle L2 zu verbinden.

Wie hier beispielhaft gezeigt umgreift der Befestigungsarm 26 eine Außenseite des Wälz- oder Gleitlagers 20 zumindest abschnittsweise. Der Befestigungsarm 26 kann als eine Schwinge ausgebildet sein, die die Außenseite des Wälz- oder Gleitlagers 20 vollumfänglich umgreift.

Der Befestigungsarm 26 erstreckt sich in Längsrichtung des Fahrzeugrahmens und weist an dem Ende, welches mit der zweiten Lagerstelle L2 verbindbar ist, eine zu der Außenkontur des Wälz- oder Gleitlagers 20 komplementäre Form auf, um an der Außenseite des Wälz- oder Gleitlagers 20 verbindbar zu sein. Dadurch kann eine ausreichende Übertragungsfläche bereitgestellt werden, um die von dem Fahrzeugrahmen induzierte Schwenkkraft auf das Gleichlaufgelenk 18 zu übertragen.

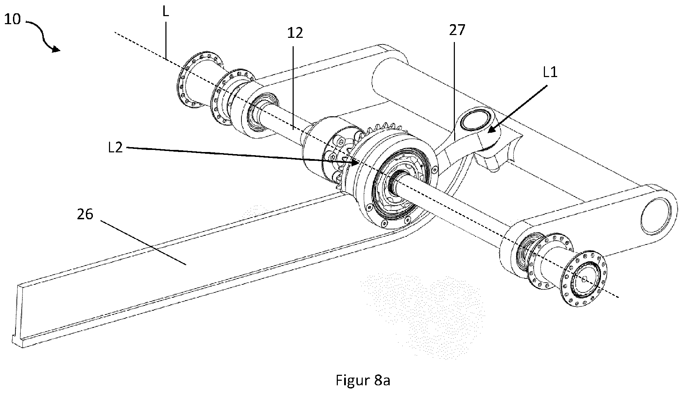

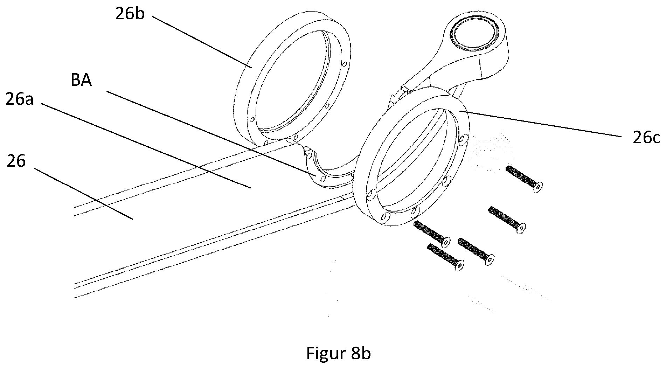

Vorzugsweise ist der Befestigungsarm 26 mehrteilig ausgestaltet (siehe z.B. Figur 8a und Figur 8b), sodass der Befestigungsarm 26 auf das Wälz- oder Gleitlager 20 und das Gleichlaufgelenk 18 montierbar ist. Vorzugsweise ist die Teilung derart, dass der Befestigungsarm 26 einen Längsträger 26a und zwei ringartige Elemente 26b, 26c aufweist, die in Längsrichtung L der Radachse 10 bzw. der Welle 12 miteinander verbunden werden, vorzugsweise verschraubt werden. In einem Beispiel ist der Befestigungsarm 26 an einem Befestigungsabschnitt BA mit dem Wälz- oder Gleitlager 20 bzw. dem Gleichlaufgelenk 18 über die ringartigen Elementen 26b, 26c (siehe Figur 8b und Figur 8c), die das Wälz- oder Gleitlager 20 im verbundenen Zustand vollumfänglich umgreifen, verbunden. In anderen Worten ist das Gleichlaufgelenk 18 und das Wälz- oder Gleitlager 20 seitlich über die ringartigen Elemente 26b, 26c an den Längsträger 26a verschraubt. In einem Beispiel kann der Längsträger 26a Teil des Fahrzeugrahmens 1 oder als ein separates Teil zwischen Fahrradrahmen 1 und Radachse 10 ausgestaltet sein.

Durch diese Ausgestaltung des Befestigungsarms 26 kann eine einfache und zuverlässige Montage der Wälz- oder Gleitlager 20 gewährleistet werden. Insbesondere kann auf diese Weise sichergestellt werden, dass die Wälz- oder Gleitlager mit einem gleichmäßigen Anpressdruck über die ringartigen Elemente 26b, 26c gelagert werden. Dadurch kann die Laufruhe verbessert und der Verschleiß des Wälz- oder Gleitlagers 20 reduziert werden.

Vorzugsweise ist das Wälz- oder Gleitlager 20 als ein Festlager 20b und ein Loslager 20a ausgestaltet, sodass eine zuverlässige Verschraubung der ringartigen Elemente 26b, 26c gewährleistet werden kann. Dies erleichtert die Montage, da eine genaue Einhaltung des Drehmoments für die Verschraubung mit einem Drehmomentschlüssel nicht notwendig ist. In anderen Worten, eine zu hohe in Bezug auf Drehmoment ausgeübte Verschraubungskraft kann somit über das Loslager kompensiert werden.

Weiterhin ist in Figur 8a beispielhaft eine alternative Anordnung der ersten Lagerstelle L1 hinter der Radachse 10, d.h. der in Richtung, welche von dem Fahrradrahmen weg weist, angeordnet. Dabei kann eine Halterung 27 einstückig mit dem Befestigungsarm 26 ausgestaltet sein.

Alternativ kann der Befestigungsarm 26 am Befestigungsabschnitt BA auch geteilt ausgestaltet sein, sodass das Wälz- oder Gleitlager 20 durch schalenartige Elemente in vertikaler Richtung (z-Achse), d.h. quer zur Längsachse der Radachse in Gravitationsrichtung miteinander verbunden, vorzugsweise verschraubt werden kann.

Wie in Figur 8c beispielhaft gezeigt ist das Antriebselement 22 mit dem Gelenkaußenteil 18a drehfest verschraubt.

In einem Beispiel, siehe z.B. Figur 3a, ist der Achsrahmen 14 bügelartig ausgestaltet und weist vorzugsweise ein zu der Welle 12 parallellaufende Strebe 141, insbesondere Rohr, und zwei Halterarme 142a, 142b auf, wobei die Haltearme sich quer zur Strebe 141 erstrecken und dazu ausgestaltet sind, die zwei Seitenwellen 12a, 12b jeweils in Richtung der Radseite drehbar zu lagern. Der Achsrahmen 14 ist vorzugsweise als eine U-Form ausgestaltet. Wie hier beispielhaft gezeigt, sind an den Haltearme 142a, 142b Wälz- oder Gleitlager angeordnet, um die Welle 12 bzw. die Seitenwellen 12a, 12b in den Haltearmen 142a, 142b zu lagern.

Des Weiteren sind die beiden Seitenwellen 12a, 12b jeweils durch das jeweilige Achswellenrad 124a, 124b in dem Ausgleichsgetriebe 24 drehbar gelagert.

Wie beispielhaft in Figur 4 gezeigt, weist der Befestigungsarm 26 eine Aufnahme 143 auf, um das Kugellager oder Pendellager aufzunehmen, und um den Fahrzeugrahmen mit dem Achsrahmen 14 schwenkbar zu verbinden.

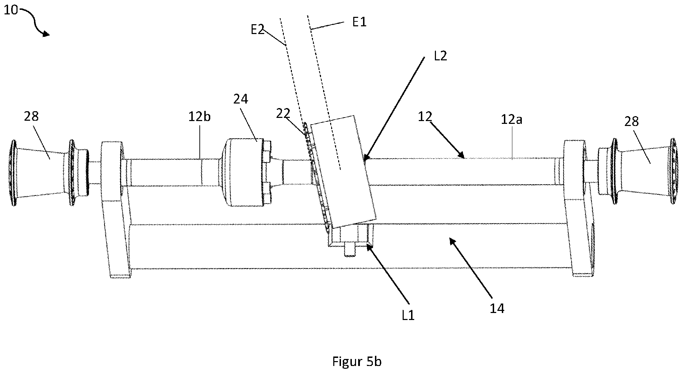

In Figur 5a sind die erste Lagerstelle L1 und die zweite Lagerstelle L2 der Radachse 10 bzw. der an den Lagerstellen L1, L2, vorzugsweise über den Befestigungsarm 26, verbundene Fahrzeugrahmen in einer neutralen bzw. aufgerichteten Stellung gezeigt. In Figur 5b sind die erste Lagerstelle L1 und die zweite Lagerstelle L2 der Radachse 10 bzw. der an den Lagerstellen L1, L2, vorzugsweise über den Befestigungsarm 26, verbundene Fahrzeugrahmen in einer gekippten Stellung nach links gezeigt. In Figur 5c sind die erste Lagerstelle L1 und die zweite Lagerstelle L2 der Radachse 10 bzw. der an den Lagerstellen L1, L2, vorzugsweise über den Befestigungsarm 26, verbundene Fahrzeugrahmen in einer gekippten Stellung nach rechts gezeigt. Dabei ist der an der ersten und zweiten Lagerstelle L1, L2 vorzugsweise am Befestigungsarm 26 verbundene Fahrzeugrahmen 1 (sieh auch Figur 6c) in einem Winkel α in Bezug auf die Gravitationsrichtung gekippt.

Das Antriebselement 22 ist an dem Gelenkaußenteil 18a (wie in Figur 3b gezeigt) des Gleichlaufgelenks 18 verbunden, sodass das Antriebselement 22 und der Fahrzeugrahmen im aufgerichteten Zustand und im gekippten Zustand in parallelen Ebenen E1, E2 zueinander liegen. Die Ebene E1 des Fahrzeugrahmens ist durch die Längsachse und eine vertikale Achse (z-Achse) quer zur Längsrichtung gebildet und die Ebene E2, in welcher das Antriebselement 22 liegt steht parallel dazu. Dadurch kann sichergestellt werden, dass ein an dem Fahrzeugrahmen angeordnete Antriebseinheit (z.B. ein durch eine Tretkurbel oder Motor angetriebenes Kettenblatt, nicht gezeigt) und das Antriebselement 22 zur Führung einer Kette im geneigten Zustand in der aufgerichteten Stellung und in der gekippten Stellung des Fahrzeugrahmens stets in derselben Ebenen liegen. Dies ist vorteilhaft, da dadurch die Kette auch im gekippten Zustand des Fahrzeugrahmens 1 nicht verschränkt wird und somit das Drehmoment über die Kette reibungslos übertragen werden kann.

In Figur 6a - Figur 6c ist ein Fahrzeug 100, insbesondere dreirädriges Lastenfahrrad, gezeigt.

Figur 6a zeigt ein dreirädriges Lastenfahrrad mit einem schwenkbaren Fahrzeugrahmen 1 und einer Radachse 10, wobei die Radachse 10 eine Hinterradachse bildet. Das Fahrzeug weist ferner einen Behälter 110 auf, der am Fahrzeugrahmen 1 angeordnet ist, wobei der Behälter 110 einen sich über der Radachse 10 erstreckenden Boden 112 und vorzugsweise eine entlang des Umfangs des Bodens verlaufende Wand (nicht gezeigt) aufweist.

Wie in Figur 6c beispielhaft durch Kippen des Fahrzeugrahmens zur rechten Seite gezeigt, ist der Fahrzeugrahmen 1 an der Radachse 10 schwenkbar gelagert. Die Radachse 10 ist zum Aufnehmen des schwenkbaren Fahrzeugrahmens 1 eingerichtet. Figur 6b zeigt das Fahrzeug 100 in der aufgerichteten Stellung. Die Radachse 10 weist eine starre Welle 12 und einen Achsrahmen 14 auf. Die Welle 12 ist mittels des Achsrahmens 14 drehbar gelagert. Der Achsrahmen 14 ist mit dem Fahrzeugrahmen 1 verbindbar. Die erste Lagerstelle L1 ist am Achsrahmen 14 (siehe im Detail z.B. Figur 4) angeordnet, um den Fahrzeugrahmen 1 an dem Achsrahmen 14 schwenkbar um die Schwenkachse zu verbinden. Die zweite Lagerstelle L2 ist an der starren Welle 12 angeordnet, um den Fahrzeugrahmen 1 an der starren Welle 12 schwenkbar um die Schwenkachse zu verbinden, wobei die Schwenkachse durch die Verbindungslinie VL (siehe Figur 4) der ersten Lagerstelle L1 und der zweiten Lagerstelle L2 in Längsrichtung des Fahrzeugrahmens definiert ist und die Schwenkachse quer zur starren Welle 12 verläuft. Die zweite Lagerstelle L2 weist das Gleichlaufgelenk 18 mit dem an dem Gleichlaufgelenk 18 umfangsseitig (mithin also außen umfangsseitig) angeordneten Wälz- oder Gleitlager 20 auf.

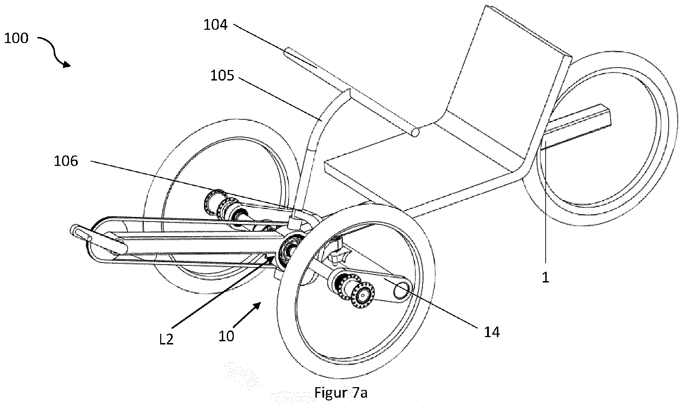

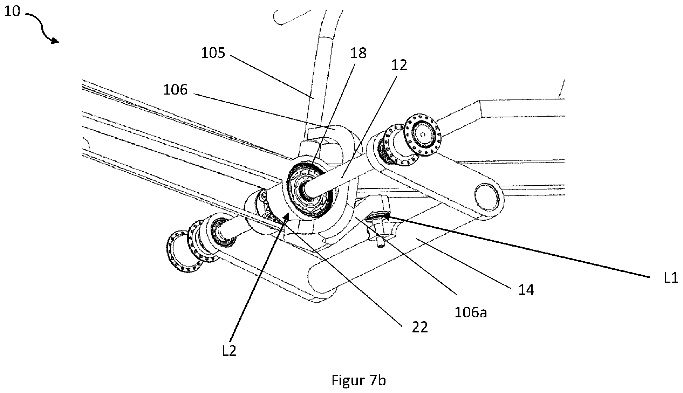

Figur 7a und Figur 7b zeigen in einem weiteren Beispiel ein Fahrzeug 100 mit einer erfindungsgemäßen Radachse 10 als Vorderachse, welche angetrieben werden kann. In diesem Beispiel ist das Fahrzeug ein Liegerad 100 und weist eine Radachse 10 und einen schwenkbaren Fahrzeugrahmen 1 auf. Wie hier gezeigt weist das Liegerad einen Lenkerrahmen 106 auf, um eine Lenkstange 105 eines Lenkers 104 mit der Radachse 10 zu verbinden. Dabei kann der Lenkerrahmen 106 bügelartig ausgestaltet sein und erstreckt sich im Wesentlichen parallel zu der Lenkerstange 105. In einem Beispiel umgreift der Lenkerrahmen 106 zumindest teilweise die zweite Lagerstelle L2, um an der zweiten Lagerstelle L2 angeordnet zu sein. Die Lenkerstange 105 ist über den Lenkerrahmen 106 mit der zweiten Lagerstelle L2 und dem Achsrahmen 14 verbunden, sodass eine Lenkbewegung über den Achsrahmen 14 auf die Radachse 10 übertragbar ist. Der Lenkerrahmen 106 weist eine Aufnahmeeinrichtung 106a auf, die sich entlang der Längsrichtung in Richtung der ersten Lagerstelle L1 erstreckt, um den Lenkerrahmen 106 mit dem Achsrahmen 14 zu verbinden. Der Lenkerrahmen 16 ist somit mit dem Achsrahmen 14 über die erste Lagerstelle L1 verbunden. Dabei ist die erste Lagerstelle L1 derart eingerichtet, dass diese Lenkkräfte auf den Achsrahmen 14 übertragen werden können, um die Radachse 10 als Ganzes zu lenken. Die Radachse 10 kann sich somit bei einer Lenkbewegung um eine gedachte vertikale Achse in Bezug auf die zweite Lagerstelle L2 drehen. Das Antriebselement 22 wird von einer Kette angetrieben. Das Drehmoment kann somit über das Gleichlaufgelenk 18 auf die starre Welle 12 der Vorderachse übertragen werden. Dies ist insbesondere für ein Liegerad vorteilhaft, da eine aufwändige und komplizierte Verteilung der Antriebselemente (insbesondere Ketten und Ritzel) an der Hinterachse entfällt.

Durch dieses Prinzip ist es möglich eine angetriebene Vorderachse bereitzustellen, welche lenkbar ist und zugleich eine Aufnahme für einen schwenkbaren Fahrzeugrahmen bereitstellt. Soweit anwendbar, können alle einzelnen Merkmale, die in den Ausführungsbeispielen dargestellt sind, miteinander kombiniert und/oder ausgetauscht werden, ohne den Bereich der Erfindung zu verlassen. Der Schutzumfang wird durch die beigefügten Ansprüche definiert.

### Bezugszeichenliste:

- 1: Fahrzeugrahmen
- 10: Radachse
- 12: Welle
- 12a, 12b: Seitenwelle
- 14: Achsrahmen
- 18: Gleichlaufgelenk
- 18a: Gelenkaußenteil
- 18b: Gelenkinnenteil
- 20: Wälz- oder Gleitlager
- 20a: Loslager
- 20b: Festlager
- 22: Antriebselement
- 24: Ausgleichgetriebe
- 26: Befestigungsarm
- 27: Halterung
- 26a: Längsträger
- 26b, c, d: ringartige Elemente
- 28: Radnabe
- 30: Fixierungselement
- 100: Fahrzeug
- 102: Räder
- 104: Lenker
- 105: Lenkerstange
- 106: Lenkerrahmen
- 110: Behälter
- 120: Wellenabschnitt
- 121a, 121b: Hohlwelle
- 122a, 122b: Innenwelle
- 124a, 124b: Achswellenrad
- 141: Strebe
- 142a, 142b: Haltearm
- 143: Aufnahme
- 181: Kugeln oder Rollen
- 182: Käfig
- 241: Ausgleichsgetriebegehäuse
- 242: Ausgleichsräder

- BA: Befestigungsabschnitt
- L1: erste Lagerstelle
- L2: zweite Lagerstelle
- S: Schwenkachse
- L: Längsachse Radachse bzw. Welle
- VL: Verbindungslinie

## Patentansprüche

1. Eine Radachse (10) zum Aufnehmen eines schwenkbaren Fahrzeugrahmens (1);
wobei die Radachse (10) eine starre Welle (12) und einen Achsrahmen (14) aufweist,
wobei die Welle (12) mittels des Achsrahmens (14) drehbar gelagert ist und der Achsrahmen (14) an den Fahrzeugrahmen (1) verbindbar ist,
wobei eine erste Lagerstelle (L1) am Achsrahmen (14) angeordnet ist, um den Fahrzeugrahmen (1) an dem Achsrahmen (14) schwenkbar um eine Schwenkachse (S) zu lagern,
wobei eine zweite Lagerstelle (L2) an der starren Welle (12) angeordnet ist, um den Fahrzeugrahmen (1) an der starren Welle (12) schwenkbar um die Schwenkachse (S) zu lagern, wobei die Schwenkachse (S) durch die Verbindungslinie (VL) der ersten Lagerstelle (L1) und der zweiten Lagerstelle (L2) in Längsrichtung des Fahrzeugrahmens (1) definiert ist und
die Schwenkachse (S) quer zur starren Welle (12) verläuft, und
wobei die zweite Lagerstelle (L2) ein Gleichlaufgelenk (18) mit einem an dem Gleichlaufgelenk (18) umfangsseitig angeordneten Wälz- oder Gleitlager (20) aufweist.

2. Radachse (10) nach Anspruch 1, wobei das Gleichlaufgelenk (18) mit einem Antriebselement (22) drehfest verbunden ist.

3. Radachse (10) nach Anspruch 1 oder 2, wobei das Gleichlaufgelenk (18) ein Gelenkaußenteil (18a) und ein Gelenkinnenteil (18b) aufweist, wobei das Gelenkinnenteil (18b) innerhalb des Gelenkaußenteils (18a) angeordnet ist und formschlüssig mit dem Gelenkaußenteil (18a) über eine oder mehrere drehmomentübertragende Kugeln (181) oder Rollen verbunden ist.

4. Radachse (10) nach Anspruch 2 und 3, wobei das Antriebselement (22) mit dem Gelenkaußenteil (18a) drehfest verbunden ist, sodass das Drehmoment auf die starre Welle (12) über das Gelenkaußenteil (18a) und die eine oder mehrere drehmomentübertragende Kugeln (181) oder Rollen auf das Gelenkinnenteil (18b) übertragbar ist, wobei ein Abschnitt der starren Welle (12) formschlüssig und/ oder kraftschlüssig und/ oder stoffschlüssig mit dem Gelenkinnenteil (18b) verbunden ist.

5. Radachse (10) nach einem der vorhergehenden Ansprüche, wobei die erste Lagerstelle (L1) ein Kugelgelenk oder ein Pendellager ist.

6. Radachse (10) nach einem der vorhergehenden Ansprüche, wobei die Radachse (10) ein Ausgleichsgetriebe (24) aufweist, welches exzentrisch in Bezug auf die Mitte der Radachse (10) angeordnet ist, wobei die Welle (12) zwei starre Seitenwellen (12a, 12b) mit unterschiedlichen Längen aufweist.

7. Radachse (10) nach Anspruch 6, wobei die zwei Seitenwellen (12a, 12b) jeweils eine Hohlwelle (121a, 121b) und eine Innenwelle (122a, 122b) aufweist, wobei die Hohlwelle (121a, 121b) die Innenwelle (122a, 122b) umschließt, und wobei die Hohlwelle (121a, 121b) mit einem Ausgleichsgetriebegehäuse (241) drehfest verbunden und die Innenwelle (122a, 122b) ein Achswellenrad (124a, 124b) aufweist, das mit mindestens einem Ausgleichsrad (242) des Ausgleichsgetriebes (24) in Eingriff steht.

8. Radachse (10) nach einem der vorhergehenden Ansprüche, wobei die Radachse (10) einen Befestigungsarm (26) aufweist, um den Fahrzeugrahmen (1) mit der zweiten Lagerstelle (L2) zu verbinden.

9. Radachse (10) nach Anspruch 8, wobei der Befestigungsarm (26) eine Außenseite des Wälz- oder Gleitlagers (20) zumindest abschnittsweise umfänglich umgreift oder als eine Schwinge ausgebildet ist, die die Außenseite des Wälz- oder Gleitlagers (20) vollumfänglich umgreift.

10. Radachse (10) nach einem der vorhergehenden Ansprüche, wobei der Achsrahmen (14) bügelartig ausgestaltet ist.

11. Radachse (10) nach Anspruch 6 und 10, wobei der Achsrahmen (14) eine zu der Welle (12) parallel laufende Strebe (141), insbesondere Rohr, und zwei Haltearme (142a, 142b) aufweist, wobei die Haltearme (142a, 142b) sich quer zur Strebe (141) erstrecken und dazu ausgestaltet sind, die zwei Seitenwellen (12a, 12b) jeweils in Richtung der Radseite drehbar zu lagern.

12. Fahrzeugrahmen (1), wobei der Fahrzeugrahmen (1) an einer Radachse (10) nach einem der vorhergehenden Ansprüche schwenkbar gelagert ist.

13. Fahrzeug (100), insbesondere mehrrädriges Lastenfahrrad, mit einem Fahrzeugrahmen (1) gemäß Anspruch 12 und einer starren Radachse (10) gemäß den Ansprüchen 1-11, wobei die Radachse (10) eine Vorder- und/ oder Hinterradachse bildet, und ferner aufweisend einen Behälter (110) der am Fahrzeugrahmen (1) angeordnet ist, wobei der Behälter (110) einen sich über der Radachse (10) erstreckenden Boden (112) und vorzugsweise eine entlang des Umfangs des Bodens verlaufende Wand aufweist.

## Claims

1. A wheel axle (10) for holding a pivoting vehicle frame (1);
wherein the wheel axle (10) has a rigid shaft (12) and an axle frame (14), wherein the shaft (12) is rotatably mounted by means of the axle frame (14) and the axle frame (14) can be connected to the vehicle frame (1),
wherein a first bearing point (L1) is arranged on the axle frame (14) in order to support the vehicle frame (1) on the axle frame (14) pivotably about a pivot axis (S),
a second bearing point (L2) being arranged on the rigid shaft (12) in order to mount the vehicle frame (1) on the rigid shaft (12) pivotably about the pivot axis (S), the pivot axis (S) being defined by the connecting line (VL) of the first bearing point (L1) and the second bearing point (L2) in the longitudinal direction of the vehicle frame (1) and the pivot axis (S) extending transversely to the rigid shaft (12), and
wherein the second bearing point (L2) has a constant velocity joint (18) with a rolling or plain bearing (20) arranged on the circumference of the constant velocity joint (18).

2. Wheel axle (10) according to claim 1, wherein the constant velocity joint (18) is non-rotatably connected to a drive element (22).

3. Wheel axle (10) according to claim 1 or 2, wherein the constant velocity joint (18) has an outer joint part (18a) and an inner joint part (18b), wherein the inner joint part (18b) is arranged inside the outer joint part (18a) and is positively connected to the outer joint part (18a) via one or more torque-transmitting balls (181) or rollers.

4. Wheel axle (10) according to claims 2 and 3, wherein the drive element (22) is non-rotatably connected to the outer joint part (18a), so that the torque can be transmitted to the rigid shaft (12) via the outer joint part (18a) and the one or more torque-transmitting balls (181) or rollers to the inner joint part (18b), wherein a section of the rigid shaft (12) is arranged to the inner joint part (18b) by a positive and/or non-positive and/or material-uniting connection.

5. Wheel axle (10) according to one of the preceding claims, wherein the first bearing point (L1) is a ball joint or a self-aligning bearing.

6. Wheel axle (10) according to one of the preceding claims, wherein the wheel axle (10) has a differential (24) which is arranged eccentrically with respect to the center of the wheel axle ( 10), wherein the shaft ( 12) has two rigid side shafts (12a, 12b) with different lengths.

7. Wheel axle (10) according to claim 6, wherein the two side shafts (12a, 12b) each have a hollow shaft (121a, 121b) and an inner shaft (122a, 122b), wherein the hollow shaft (121a, 121b) encloses the inner shaft (122a, 122b), and wherein the hollow shaft (121a, 121b) is non-rotatably connected to a differential gear housing (241) and the inner shaft (122a, 122b) has an axle shaft gear (124a, 124b) which engages with at least one differential gear (242) of the differential (24).

8. Wheel axle (10) according to one of the preceding claims, wherein the wheel axle (10) comprises a fastening arm (26) for connecting the vehicle frame (1) to the second bearing location (L2).

9. Wheel axle (10) according to claim 8, wherein the fastening arm (26) embraces an outer side of the rolling or plain bearing (20) at least in sections circumferentially or is designed as a rocker which embraces the outer side of the rolling or plain bearing (20) fully circumferentially.

10. Wheel axle (10) according to one of the preceding claims, wherein the axle frame (14) is designed in the form of a bracket.

11. Wheel axle (10) according to claims 6 and 10, wherein the axle frame (14) has a strut (141), in particular a tube, running parallel to the shaft (12) and two holding arms (142a, 142b), wherein the holding arms (142a, 142b) extend transversely to the strut (141) and are designed to rotatably support the two side shafts (12a, 12b) in each case in the direction of the wheel side.

12. Vehicle frame (1), wherein the vehicle frame (1) is pivotably mounted on a wheel axle (10) according to one of the preceding claims.

13. A vehicle (100), in particular a multi-wheeled cargo bicycle, comprising a vehicle frame (1) according to claim 12 and a rigid wheel axle (10) according to claims 1-11, wherein the wheel axle (10) forms a front and/or rear wheel axle, and further comprising a container (110) arranged on the vehicle frame (1), wherein the container (110) comprises a bottom (112) extending above the wheel axle (10) and preferably a wall extending along the circumference of the bottom.

## Revendications

1. Un essieu (10) pour recevoir un châssis de véhicule pivotant (1) ;
l'essieu de roue (10) présentant un arbre rigide (12) et un cadre d'essieu (14), l'arbre (12) étant logé de manière rotative au moyen du cadre d'essieu (14) et le cadre d'essieu (14) pouvant être relié à le châssis du véhicule (1),
un premier point d'appui (L1) étant disposé sur le cadre d'essieu (14) pour monter le châssis de véhicule (1) sur le cadre d'essieu (14) de manière pivotante autour d'un axe de pivotement (S),
dans lequel un deuxième point d'appui (L2) est disposé sur l'arbre rigide (12) pour supporter le châssis de véhicule (1) sur l'arbre rigide (12) de manière pivotante autour de l'axe de pivotement (S), l'axe de pivotement (S) étant défini par la ligne de jonction (VL) du premier point d'appui (L1) et du deuxième point d'appui (L2) dans la direction longitudinale du châssis de véhicule (1) et l'axe de pivotement (S) s'étendant transversalement à l'arbre rigide (12), et
le deuxième point d'appui (L2) présentant un joint homocinétique (18) avec un palier à roulement ou à glissement (20) disposé sur la périphérie du joint homocinétique (18).

2. Essieu de roue (10) selon la revendication 1, dans lequel le joint homocinétique (18) est relié de manière solidaire en rotation à un élément d'entraînement (22).

3. Essieu de roue (10) selon la revendication 1 ou 2, dans lequel le joint homocinétique (18) présente une partie extérieure d'articulation (18a) et une partie intérieure d'articulation (18b), la partie intérieure d'articulation (18b) étant disposée à l'intérieur de la partie extérieure d'articulation (18a) et étant reliée par complémentarité de forme à la partie extérieure d'articulation (18a) par l'intermédiaire d'une ou plusieurs billes (181) ou rouleaux transmettant le couple.

4. Essieu de roue (10) selon les revendications 2 et 3, dans lequel l'élément d'entra nement (22) est relié de manière solidaire en rotation à la partie extérieure d'articulation (18a), de sorte que le couple de rotation peut être transmis à l'arbre rigide (12) par l'intermédiaire de la partie extérieure d'articulation (18a) et d'une ou plusieurs billes (181) ou rouleaux transmettant le couple de rotation à la partie intérieure d'articulation (18b), une section de l'arbre rigide (12) étant reliée par complémentarité de formes et/ou par force et/ou par matière à la partie intérieure d'articulation (18b).

5. Essieu de roue (10) selon l'une quelconque des revendications précédentes, dans lequel le premier point d'appui (L1) est une rotule ou un palier à rotule.

6. Essieu de roue (10) selon l'une quelconque des revendications précédentes, dans lequel l'essieu de roue (10) comprend un engrenage d'équilibrage (24) qui est excentré par rapport au centre de l'essieu de roue (10), l'arbre (12) comprenant deux arbres latéraux rigides (12a, 12b) de longueurs différentes.

7. Essieu de roue (10) selon la revendication 6, dans lequel les deux arbres latéraux (12a, 12b) présentent chacun un arbre creux (121a, 121b) et un arbre intérieur (122a, 122b), l'arbre creux (121a, 121b) entourant l'arbre intérieur (122a, 122b), et dans lequel l'arbre creux (121a, 121b) est relié de manière solidaire en rotation à un carter de différentiel (241) et l'arbre intérieur (122a, 122b) comporte une roue d'arbre d'essieu (124a, 124b) qui est en prise avec au moins une roue de différentiel (242) du différentiel (24).

8. Essieu (10) selon l'une quelconque des revendications précédentes, dans lequel l'essieu (10) comprend un bras de fixation (26) pour relier le châssis (1) du véhicule au deuxième point d'appui (L2).

9. Essieu de roue (10) selon la revendication 8, dans lequel le bras de fixation (26) entoure périphériquement, au moins par sections, un côté extérieur du palier à roulement ou à glissement (20) ou est réalisé sous la forme d'un bras oscillant qui entoure entièrement le côté extérieur du palier à roulement ou à glissement (20).

10. Essieu (10) selon l'une quelconque des revendications précédentes, dans lequel le cadre d'essieu (14) est configuré en forme d'étrier.

11. Essieu de roue (10) selon les revendications 6 et 10, dans lequel le cadre d'essieu (14) comprend une entretoise (141), en particulier un tube, s'étendant parallèlement à l'arbre (12), et deux bras de retenue (142a, 142b), les bras de retenue (142a, 142b) s'étendant transversalement à l'entretoise (141) et étant configurés pour supporter les deux arbres latéraux (12a, 12b) de manière rotative respectivement en direction du côté de la roue.

12. Châssis de véhicule (1), le châssis de véhicule (1) étant monté pivotant sur un axe de roue (10) selon l'une des revendications précédentes.

13. Véhicule (100), en particulier bicyclette de transport à plusieurs roues, comprenant un châssis de véhicule (1) selon la revendication 12 et un essieu de roue rigide (10) selon les revendications 1-11, l'essieu de roue (10) formant un essieu de roue avant et/ou arrière, et comprenant en outre un récipient (110) qui est disposé sur le châssis de véhicule (1), le récipient (110) comprenant un fond (112) s'étendant au-dessus de l'essieu de roue (10) et de préférence une paroi s'étendant le long de la périphérie du fond.
